# EUROPEAN PATENT APPLICATION

(11) **EP 2 164 255 A1**
(43) Date of publication of application: **17.03.2010**
(21) Application number: 09010160.1
(22) Date of filing: 06.08.2009
(51) Int. Cl.: H04N 5/765, H04N 9/896

(54) **Video recording and playback apparatus**

(30) Priority: 10.09.2008 JP 2008232389
(71) Applicant: Kabushiki Kaisha Toshiba, Minato-ku, Tokyo 105-8001 (JP)
(72) Inventor: Aoki, Toshiaki, Tokyo (JP)
(74) Representative: Wiedemann, Peter

(57) **Abstract**

A video recording and playback apparatus which can perform the recording operation and the playback operation without a synchronous conversion circuit is provided, even if recording and playback are asynchronous. An SDI signal containing video content is coded by input processing unit 141, and the coded video data is temporarily held by input buffer 142. The coded video data is read from input buffer 142, is outputted and is stored in storage processing unit 15. Other coded video data stored in storage processing unit 15 is read and is held temporarily in output buffer 161. Reading-out of the coded video data from input buffer 142 does not synchronize with an input synchronizing signal and is performed according to the cycle of the synchronizing signal generated by external synchronizing signal detector unit 12, and the coded video data read out is transmitted to storage processing unit 15.

## Description

### CROSS REFERENCE TO RELATED APPLICATION

This application is based upon and claims the benefit of priority from Japanese Patent Application No. 2008-232389, filed on September 10, 2008, the entire contents of which are incorporated herein by reference.

### FIELD OF THE INVENTION

This invention relates to a video recording and playback apparatus which records and plays back video contents with reference to external synchronizing signal, such as a black burst signal (hereinafter referred to as "BB signal").

### DESCRIPTION OF THE BACKGROUND

As for a video recording and playback apparatus which uses a hard disk drive unit, a flash memory, or another type of readable/writable medium as a storage unit, it is common to acquire an external synchronizing signal, such as a BB signal, from an external source and to operate the whole apparatus with reference to the external synchronizing signal. This technique is used more frequently, when the video recording and playback apparatus has a plurality of recording channels and playback channels (see JP, P2006-301748A).

This kind of video recording and playback apparatus has a recording unit and a playback unit. The recording unit receives a video data and records the received video data on the storage unit. The playback unit plays back the video data read out from the storage unit to output the video data which is played back. The video recording and playback apparatus operates the recording unit and the playback unit according to a cycle of the external synchronizing signal. At this time, the video recording and playback apparatus transmits the video data from the recording unit to the storage unit and a transmission of the video data from the storage unit to the playback unit in one frame with reference to the frame synchronizing signal of the external synchronizing signal. Thereby, both operations of the recording and the playback in the video recording and playback apparatus are guaranteed.

When the recording unit receives the video data asynchronous with the external synchronizing signal or an internal synchronizing signal, the recording unit and the playback unit become asynchronous with each other and there is a possibility that a breakdown may arise in data transmission due to any differences in synchronizing frequencies. Accordingly, a conventional video recording and playback apparatus installs a synchronous conversion circuit (frame synchronizer) in the recording unit and makes the synchronizing frequency of the recording unit coincide with the synchronizing frequency of the playback unit.

However, the synchronous conversion circuit is expensive and large.

As mentioned above, in a conventional video recording and playback apparatus, when the recording unit and the playback unit are asynchronous, the synchronous conversion circuit must be installed in the recording unit in order to perform recording and playback normally. Accordingly, the video recording and playback apparatus has an increase in cost and volume.

### SUMMARY OF THE INVENTION

A purpose of the present invention is to provide a video recording and playback apparatus which can perform recording operation and playback operation without installing a synchronous conversion circuit even if the recording unit and the playback unit are asynchronous with each other.

The video recording and playback apparatus concerning the embodiment has an input processing unit, an input buffer, an storage processing unit, an output buffer, and an output processing unit. The input processing unit is configured to receive data containing video data which is inputted at a 1st rate and has a 1st synchronizing signal, and an input processing unit is configured to code the video data received and to output the video data coded. The input buffer is configured to temporarily hold the coded video data outputted by the input processing unit and to output the video data at a 2nd rate which is faster than the 1st rate. The storage processing unit is configured to store the coded video data which is outputted from the input buffer and to read out coded other video data stored at a 3rd rate which is faster than the 1st rate. The output buffer is configured to hold temporarily the coded other video data read from the storage processing unit and to output the coded other video data held. The output processing unit is configured to decode the coded other video data outputted from the output buffer according to a cycle of the 2nd synchronizing signal and to output the other video data.

### BRIEF DESCRIPTION OF THE DRAWINGS

Fig. 1 is a block diagram showing a functional constitution of a video recording and playback apparatus according to a first embodiment.
Fig. 2 is a schematic diagram showing a recording and playback operation when a synchronizing signal of an input SDI (Serial Digital Interface) signal and a synchronizing signal of a BB signal synchronize.
Fig. 3 is a schematic diagram showing a recording and playback operation when a cycle of the synchronizing signal of the input SDI signal is shorter than a cycle of the synchronizing signal of the BB signal.
Fig. 4 is a schematic diagram showing a recording and playback operation when the cycle of the synchronizing signal of the input SDI signal is longer than the cycle of the synchronizing signal of the BB signal.
Fig. 5 is a block diagram showing a functional constitution of a video recording and playback apparatus according to a second embodiment.
Fig. 6 is a block diagram showing a synchronizing signal generator unit.

### DETAILED DESCRIPTION OF THE INVENTION

Hereafter, the video recording and playback apparatus according to the embodiments of the present invention is described in detail with reference to the drawings.

### (1st embodiment)

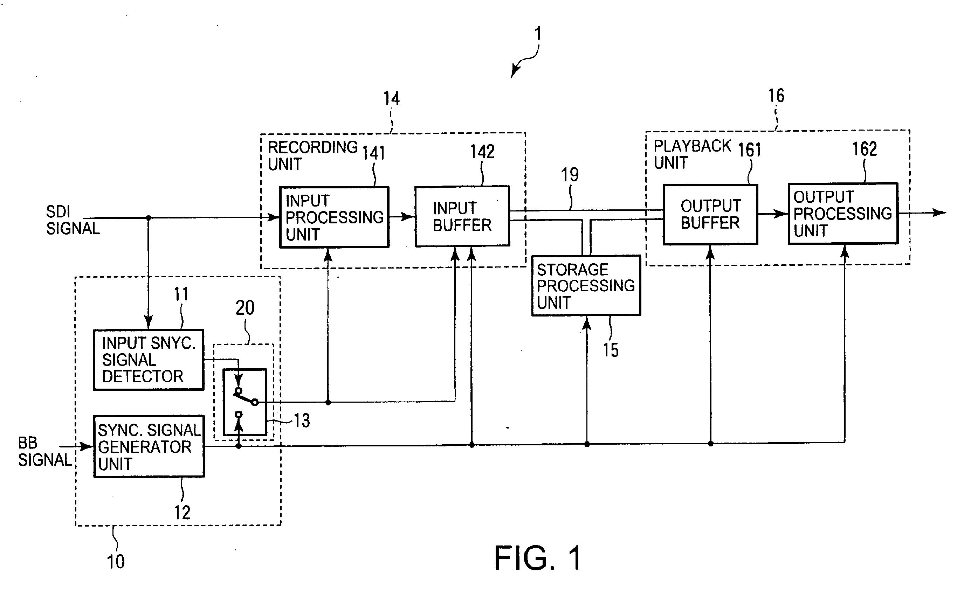

Fig. 1 is a block diagram showing a functional constitution of the embodied video recording and playback apparatus 1 according to the first embodiment. In this embodiment, video recording and playback apparatus 1 receives a SDI (Serial Digital Interface) signal including information of video contents. Video recoding and playback apparatus 1 also receives a BB signal as an external synchronizing signal which is a reference signal.

Video recording and playback apparatus 1 has synchronizing signal unit 10, recording unit 14, storage processing unit 15, and playback unit 16.

Synchronizing signal unit 10 chooses either a synchronizing signal of the SDI signal which is detected by input synchronizing signal detector 11 or a synchronizing signal which is generated by synchronizing signal generator unit 12 using switch 13 and outputs it to recording unit 14. Hereinafter, the synchronizing signal outputted from input synchronizing signal detector 11 is called an input synchronizing signal. The synchronizing signal outputted from synchronizing signal generator unit 12 is also called an output synchronizing signal.

Recording unit 14 receives the SDI signal and the synchronizing signal outputted from switch 13, separates video data from the SDI signal, and codes the separated video data with reference to the synchronizing signal. Recording unit 14 supplies the coded video data to storage processing unit 15 via bus 19 based on the output synchronizing signal.

Storage processing unit 15 stores the coded video data, reads a coded video data stored and outputs the coded video data to playback unit 16 via bus 19 based on the output synchronizing signal.

Playback unit 16 receives the coded video data and the output synchronizing signal and it then decodes the coded video data based on the output synchronizing signal to play back the video data.

Next, each unit is explained.

Synchronizing signal unit 10 has input synchronizing signal detector 11, synchronizing signal generator unit 12, and synchronizing signal switching unit 20. Synchronizing signal switching unit 20 has switch 13.

Input synchronizing signal detector 11 detects the synchronizing signal from the SDI signal received and outputs the synchronizing signal to switch 13. The synchronizing signal (hereinafter referred to as "input synchronizing signal") outputted from input synchronizing signal detector 11 includes clock CLK-R and frame synchronizing signal FRAME-R.

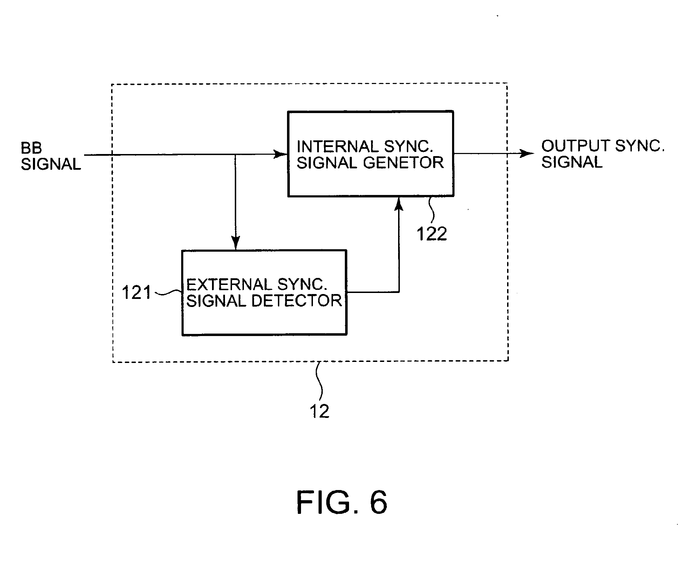

Synchronizing signal generator unit 12 has external synchronizing signal detector 121 and internal synchronizing signal generator 122, as shown in Fig. 6. External synchronizing signal detector 121 detects the existence of the BB signal including a synchronizing signal inputted from the outside and outputs a detection result to internal synchronizing signal generator 122. Internal synchronizing signal generator 122 generates and output a synchronizing signal. Internal synchronizing signal generator 122 synchronizes the synchronizing signal to generate with the synchronizing signal of the BB signal when the BB signal exists. Internal synchronization signal generator 122 generates the synchronizing signal unrelated to the synchronizing signal of the BB signal when the BB signal does not exist. That is, internal synchronizing signal generator 122 generates the asynchronous synchronizing signal to the synchronizing signal of the BB signal. Synchronizing signal generator unit 12 outputs the synchronizing signal to switch 13, recording unit 14, storage processing unit 15, and playback unit 16. The synchronizing signal (hereinafter referred to as "output synchronizing signal") outputted from synchronizing signal generator unit 12 includes clock CLK-P and frame synchronizing signal FRAME-P.

Synchronizing signal switching unit 20 outputs either the input synchronizing signal or the output synchronizing signal selectively selected by switch 13. Selection operation of switch 13 is performed by a user of the video recording and playback apparatus 1. When the input synchronizing signal and the output synchronizing signal synchronize, switch 13 outputs the output synchronizing signal. When the input synchronizing signal and the output synchronizing signal do not synchronize, switch 13 selects to output the input synchronizing signal.

Recording unit 14 has input processing unit 141 and input buffer 142.

Input processing unit 141 receives the SDI signal and the synchronizing signal outputted from switch 13. Input processing unit 141 separates video data, voice data, etc from the SDI signal and extracts only the necessary parts from the data using the synchronizing signal outputted from switch 13.

Input processing unit 141 further codes the effective part according to a predetermined compression standards such as MPEG (Moving Picture Experts Group) and outputs the coded video data. The coded video data is held temporarily in input buffer 142 with reference to the clock (CLK-R or CLK-P) of the synchronizing signal outputted from switch 13. Holding of the data in input buffer 142 is delayed several frames to coding by input processing unit 141. As for holding in input buffer 142, one frame of coded video data is written within one frame using the clock of the synchronizing signal outputted from switch 13. During this writing, a counter (not shown in the Figs.) counts the number of the video data stored in input buffer 142 within 1 frame of frame synchronizing signal FRAME-P of the output synchronizing signal. The video data number is obtained by counting the number of valid data of the clock of the synchronizing signal outputted from switch 13 within 1 frame of frame synchronizing signal FRAME-P.

Input buffer 142 reads out the held coded video data in about one-fourth time of 1 frame time utilizing a clock of a clock frequency 4 times the frequency of clock CLK-P, for example. The coded video data which is read out this time is the video data stored in input buffer 142 within one cycle of FRAME-P (not FRAME-R) of the output synchronizing signal, and the video data of the number counted by the counter is read. The coded video data which is read out is outputted to storage processing unit 15 via bus 19. Although the clock used for read out of the coded video data from input buffer 142 is generated based on clock CLK-P, the clock may not be restricted to this, as it may also be a clock asynchronous to clock CLK-P.

Storage processing unit 15 has a storage unit (not shown) which comprises a hard disk drive, a flash memory, or other medium used as a storage unit inside.

Storage processing unit 15 stores the coded video data which is outputted from input buffer 142 in the storage unit. Storage processing unit 15 reads out other coded video data stored in the storage unit and transfers the read coded video data to output buffer 161 via bus 19. Writing the coded video data to the storage unit is performed at the rate which the coded video data is read out from input buffer 142. In reading-out the coded video data from the storage unit, the coded video data corresponding to one frame of frame synchronizing signal FRAME-P is read out with a clock frequency which is 4 times the frequency of clock CLK-P.

Writing and reading-out to storage processing unit 15 are performed within one frame in accordance with the cycle of frame synchronizing signal FRAME-P, and writing is performed after reading-out. At this time, storage processing unit 15 performs writing and reading-out at a rate higher than the transmission rate of the SDI signal inputted into input processing unit 141. Since writing and reading-out are performed at a clock frequency 4 times the frequency of clock CLK-P as mentioned above, writing and read out can be performed at about half of one the frame time of frame synchronizing signal FRAME-P. Writing and reading-out are preformed at predetermined position in one frame of frame synchronizing signal FRAME-P, respectively, so that writing data and reading data do not collide on bus 19.

Transmission of the coded video data from input buffer 142 to storage processing unit 15 does not need to be performed per one frame of frame synchronizing signal FRAME-P, it can be performed per multiple frames.

Playback unit 16 has output buffer 161 and output processing unit 162.

Output buffer 161 holds temporarily the coded video data which is read out from storage processing unit 15 with reference to the clock which reads the video data coded from the storage unit. Output buffer 161 outputs the coded video data held to output processing unit 162 with reference to clock CLK-P of the output synchronizing signal. Output processing unit 162 decodes the coded video data based on clock CLK-P and frame synchronizing signal FRAME-P of the output synchronizing signal to generate the video data, changes the video data into the SDI signal, and outputs the SDI signal externally.

Next, recording and playback operation of video recording and playback apparatus 1 in the above-mentioned constitution is explained.

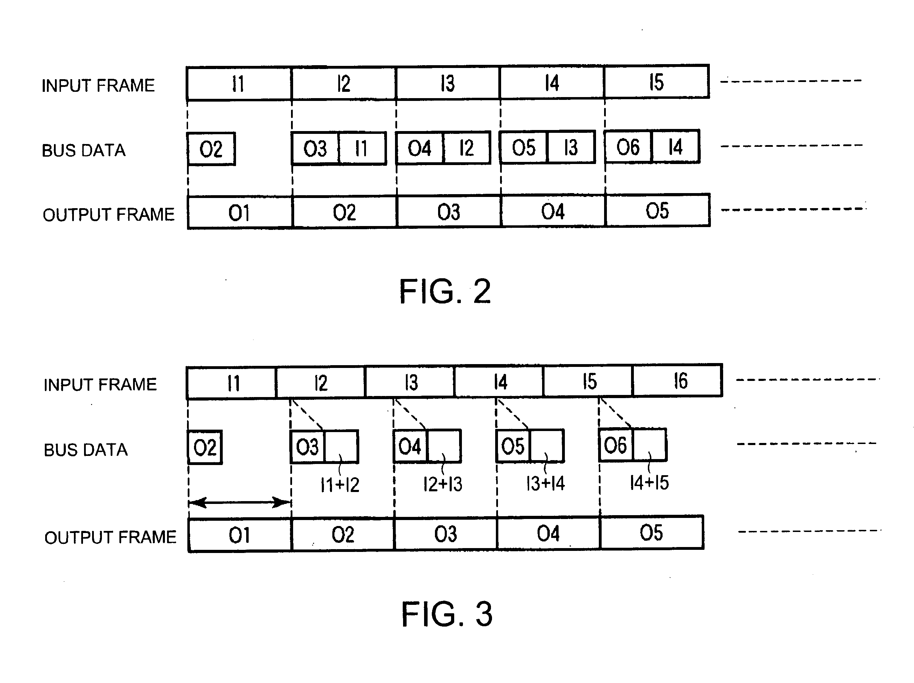

Fig. 2 is a schematic diagram illustrating the recording operation and the playback operation of the SDI signal when the input synchronizing signal and the output synchronizing signal synchronize. This shows the case where a frequency of the input is the same as a frequency of the output. Fig. 2 shows relation of the data held in input buffer 142 in the frame period of the input synchronizing signal, the data which flows through bus 19 in the frame period of the output synchronizing signal, and the data decoded and outputted by output processing unit 162. Since the input synchronizing signal and the output synchronizing signal synchronize, the output synchronizing signal is outputted from switch 13.

In the recording operation, input data I1-I5 are inputted into input processing unit 141 in series. Input data I1-I5 are coded one by one by input processing unit 141 with clock CLK-P and frame synchronizing signal FRAME-P. Coded input data I1-I5 is held with a frame period of frame synchronizing signal FRAME-P in input buffer 142 using clock CLK-P. The number of the input data held in input buffer 142 within 1 frame of frame synchronizing signal FRAME-P is counted by the counter. As mentioned above, a frame in which the coded input data is held in input buffer 142 is several frames behind a frame in which the input data is inputted in input processing unit 141.

Coded input data I1-I5 which is held in input buffer 142 within each frame period of frame synchronizing signal FRAME-P is read out and transmitted to storage processing unit 15 via bus 19, using a clock of a clock frequency 4 times the clock frequency of clock CLK-P in each immediately following frame period of frame synchronizing signal FRAME-P. The coded input data which is read out within each frame period is the amount of input data counted by the counter. For example, a frame in which input data I1 coded is read out from input buffer 142 is one frame behind a frame in which input data I1 is held in input buffer 142. Storage processing unit 15 stores transmitted and coded input data I1 in the storage unit.

Thereby, coding of input data I1-I5 in input processing unit 141, holding of coded input data I1-I5 in input buffer 142, reading-out of compressed input data I1-I5 from input buffer 142, and storing of compressed input data I1-I5 to storage processing unit 15 are performed.

In the playback operation, in the frame period of frame synchronizing signal FRAME-P, output data O1 stored in the storage unit is read out from storage processing unit 15 using a clock of a clock frequency 4 times the frequency of clock CLK-P, and output data O1 read out is held in output buffer 161 via bus 19. The held output data O1 is outputted from output buffer 161 to output processing unit 142 in the next frame period using clock CLK-P. Output data O1 is decoded and outputted by output processing unit 162 using clock CLK-P and frame synchronizing signal FRAME-P.

Hereafter, repeating these, output data O1, O2, ... are read out from storage processing unit 15, are held in output buffer 161, are read out from output buffer 161, are further decoded by output processing unit 162, and decoded output data O1, 02, ... are outputted from playback unit 16.

When the recording and the playback are performed simultaneously, both writing and reading to storage processing unit 15 are performed within one frame of frame synchronizing signal FRAME-P. Reading-out is performed in the first portion of one frame, and writing is performed continuously For example, both the reading-out of output data 03 and the writing of coded input data I1 are performed in one frame, and both output data and the coded input data flow in bus 19 during a signal frame period. For this reason, storage processing unit 15 performs writing and reading-out at a rate higher than the transmission rate of the input signal inputted to input processing unit 141. In the embodiment, writing and reading-out are performed by utilizing a clock of a clock frequency 4 times the frequency of clock CLK-P.

Next, Fig. 3 is a schematic diagram showing the recording operation and playback operation of the SDI signal when the frame cycle of the input synchronizing signal is smaller than the frame cycle of the output synchronizing signal. This shows a case where the frequency of the input is higher than the frequency of the output. Fig. 3 shows the relation of the data held in input buffer 142 in the frame period of the input synchronizing signal, the data which flows through bus 19 in the frame period of the output synchronizing signal, and the data decoded and outputted by output processing unit 162. In this case, the input synchronizing signal and the output synchronizing signal do not synchronize, and the input synchronizing signal is outputted from switch 13.

In the recording processing, input data I1-I5 are first inputted into input processing unit 141 one by one. Input data I1-I5 are coded and outputted to input buffer 142 one by one by input processing unit 141 with clock CLK-R of the input synchronizing signal and the frame period of frame synchronizing signal FRAME-R. Coded input data I1-I5 is held temporarily in input buffer 142 with the frame cycle of frame synchronizing signal FRAME-R. synchronizing signal FRAME-R. Coded input data I1-I5 is held temporarily in input buffer 142 with the frame cycle of frame synchronizing signal FRAME-R. The number of the input data held in 1 frame period of frame synchronizing signal FRAME-P in input buffer 142 is counted by the counter.

The input data stored in input buffer 142 in one frame period of frame synchronized signal FRAME-P is read out at clock frequency 4 times the frequency of clock CLK-P according to a cycle of FRAME-P and is transmitted to storage processing unit 15 via bus 19 in series. The coded input data which is read out is the amount of the coded input data counted by the counter. Thereby, the data coded in one frame period of frame synchronizing signal FRAME-P can be taken out. For example, in one frame period of frame synchronizing signal FRAME-P, from input buffer 142, coded input data I1 and a part of coded input data I2 are read out and transmitted to storage processing unit 15 via bus 19. In a following frame period, a remainder of coded input data I2 and a part of coded input data I3 are read out and transmitted to storage processing unit 15.

Thereby, input data I1, I2, I3, ... inputted in input processing unit 141 are coded and coded input data I1, I2, I3, ... are stored in storage processing unit 15.

In the playback processing, according to the frame cycle of frame synchronizing signal FRAME-P, coded output data O1 which is stored in the storage unit is read out from storage processing unit 15 with a clock frequency 4 times the frequency of clock CLK-P is transmitted to output buffer 161 via bus 19, and is held temporarily in output buffer 161. Output data 01 is outputted from output buffer 161 to output processing unit 162 by clock CLK-P in a subsequent frame period and is decoded and outputted by output processing unit 162 using clock CLK-P and frame synchronizing signal FRAME-P.

Hereafter, repeating these, output data O1, 02, ... are read out from storage processing unit 15, are held in output buffer 161, are read out from output buffer 161, are further decoded by output processing unit 162, and decoded output data 01, 02, ... are outputted from playback unit 16.

In this case, since the frame cycle of the input synchronizing signal is smaller than the frame cycle of the output synchronizing signal, reading-out from input buffer 142 is performed in larger amounts of data than that of one frame of the input signal. For this reason, even if the input signal and the output signal are asynchronous, overflow of input buffer 142 dose not occur. Writing and reading-out to storage processing unit 15 are performed at a speed higher than the transmission rate of the input signal, for example 4 times higher, and writing and reading-out are performed at different times in one frame of frame synchronized signal FRAME-P. For this reason, write data and read data do not collide on bus 19.

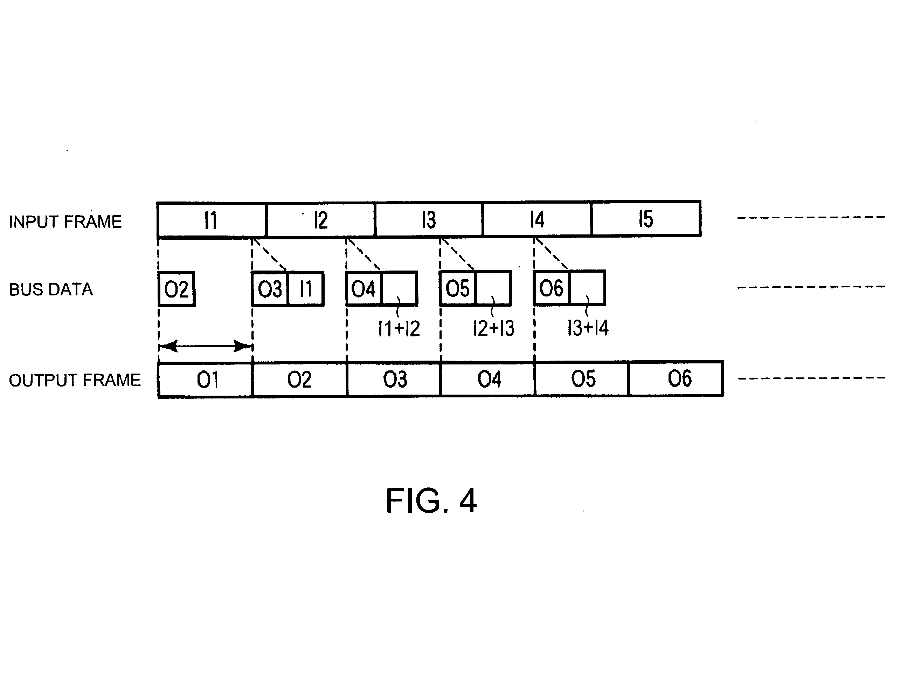

Next, Fig. 4 is a schematic diagram showing recording and playback operation of the SDI signal when the frame cycle of the input synchronizing signal is larger than the frame cycle of the BB signal. This shows a case where the frequency of the input is lower than the frequency of the output. Fig. 4 shows the relation of the data held in input buffer 141 in the frame period of the input synchronizing signal, the data which flows on bus 19 in the frame period of the output synchronizing signal and the data decoded and outputted by output processing unit 162. In this case, the input synchronizing signal is outputted from switch 13.

In the recording processing, input data I1-I5 are first inputted into input processing unit 14 one by one. Input data I1-I5 are coded and outputted to input buffer 142 one by one by input processing unit 141 with clock CLK-R and the frame period of frame synchronizing signal FRAME-R of the input synchronizing signal. Coded input data I1-I5 are held temporarily in input buffer 142 with the frame cycle of frame synchronizing signal FRAME-R. The number of the input data held in input buffer 142 in 1 frame period of frame synchronizing signal FRAME-P is counted by the counter.

According to the period of frame synchronizing signal FRAME-P of the output synchronizing signal, the input data stored in input buffer 142 in 1 frame period of frame synchronized signal FRAME-P is read out at a clock frequency 4 times the frequency of clock CLK-P one by one and is transmitted to storage processing unit 15 via bus 19. The coded input data which is read out is the amount of the coded input data counted by the counter. Thereby, the data coded in 1 frame period of frame synchronizing signal FRAME-P can be taken out. For example, in one frame of frame synchronizing signal FRAME-P, from input buffer 142, a part of coded input data I1 is read out and is transmitted to storage processing unit 15 via bus 19. In a following frame, a remainder of coded input data I1 and a part of coded input data I2 are read out and are transmitted to storage processing unit 15.

Thereby, input data I1, I2, I3, ... inputted into input processing unit 141 are coded and coded input data I1, I2, I3, ... are stored in storage processing unit 15.

In the playback processing, according to the frame cycle of frame synchronizing signal FRAME-P, coded output data O1 which is stored in the storage unit is read out from storage processing unit 15 at a clock frequency 4 times the frequency of clock CLK-P and is transmitted to output buffer 161 via bus 19, and is held temporarily in output buffer 161. Output data O1 is outputted from output buffer 161 to output processing unit 162 by clock CLK-P in a following frame period and is decoded and outputted by output processing unit 162 using clock CLK-P and frame synchronizing signal FRAME-P.

Hereafter, repeating these, output data O1, 02, ... are read out from storage processing unit 15, are held in output buffer 161, are read out from output buffer 161, are further decoded by output processing unit 162, and decoded output data O1, 02, ... are outputted from playback unit 16.

In this case, since the frame cycle of the input synchronizing signal is larger than the frame cycle of the output synchronizing signal, reading-out from input buffer 142 is performed on data that is smaller than one frame of the input signal. For this reason, even if the input signal and the output signal are asynchronous, underflow of input buffer 142 does not occur. Writing and reading-out to storage processing unit 15 are performed at a speed, for example, 4 times higher than the rate of the input signal. Under these circumstances writing and reading-out are performed at different times during one frame of frame synchronized signal FRAME-P. For this reason, write data and read data do not collide on bus 19.

As mentioned above, in the 1st embodiment, the input data stored in input buffer 142 in the frame period of frame synchronizing signal FRAME-P of the output synchronizing signal which does not relate the input synchronizing signal, is transferred to storage processing unit 15 via bus 19 according to the frame period of the output synchronizing signal. Thereby, since bus 19 transmits the data in an approximately fixed amount according to the transmission rate of the input signal, recording operation and playback operation can be performed simultaneously without causing the breakdown of the data transmission because of the difference in synchronizing frequency.

Therefore, according to the constitution of the 1st embodiment, even if the recording unit and the playback unit are asynchronous, the video recording and playback apparatus can perform recording operation and playback operation without the need of a synchronous conversion circuit.

The video recording and playback apparatus of the present invention is premised on the case where the input signal inputted into recording unit 14 differs from the video data which is read out from storage processing unit 15 to be played back by the playback unit. However, the frequency of the input signal inputted into recording unit 14 is higher than or equal to the frequency of the video data outputted from playback unit 16, the video data can be played back from the recording unit immediately after storing.

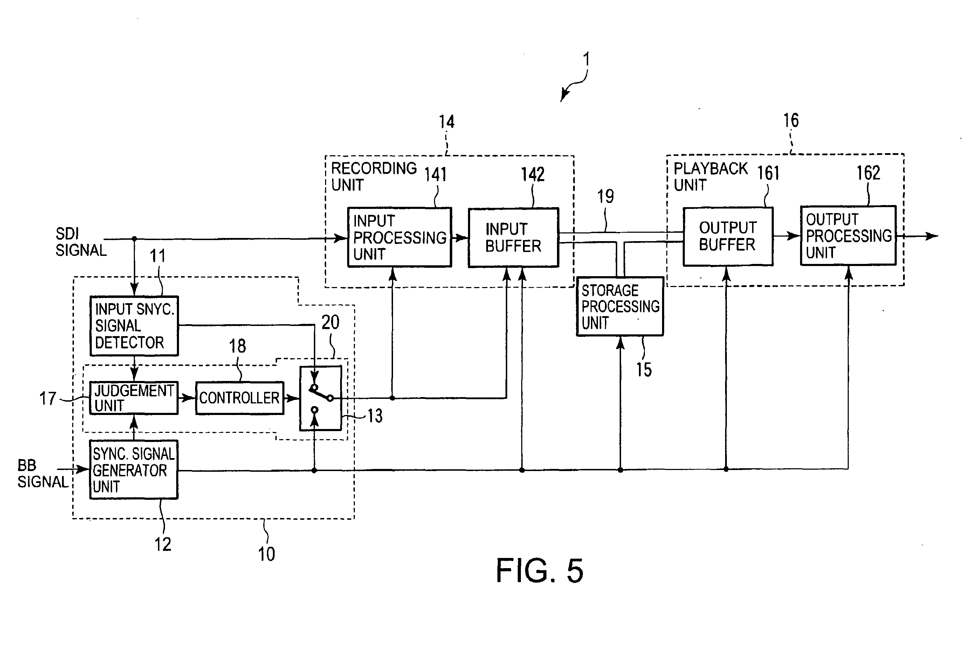

(2nd embodiment) Fig. 5 is a block diagram showing a functional structure of video recording and playback apparatus 1 according to the second embodiment. In Fig. 5, identical parts with Fig. 1 are given the same numerals and explanation of the overlapping portions are omitted. As for video recording and playback apparatus 1 of embodiment 1, the user operates the change of switch 13. In video recording and playback apparatus 1 of embodiment 2, synchronizing signal switching unit 20 has judgment unit 17, control unit 18 and switch 13. Judgment unit 17 judges whether the input synchronizing signal and the output synchronizing signal synchronize, and control unit 18 changes switch 13.

Input synchronizing signal detector 11 detects the synchronizing signal of the SDI signal inputted and outputs the synchronizing signal to synchronizing signal switching unit 20. The synchronizing signal outputted includes clock CLK-R and frame synchronizing signal FRAME-R. The synchronizing signal is given to switch 13 and judgment unit 17.

Synchronizing signal generator unit 12 outputs the synchronizing signal synchronized with the synchronizing signal of the BB signal inputted from the outside source when synchronizing signal generator unit 12 detects the BB signal as explained in 1st embodiment. Synchronizing signal generator unit 12 outputs the synchronizing signal generated inside which is asynchronous to the synchronizing signal of the BB signal when synchronizing signal generator unit 12 can not detect the BB signal. Synchronizing signal generator unit 12 outputs the synchronizing signal to synchronizing signal switching unit 20, recording unit 14, storage processing unit 15, and playback unit 16. The synchronizing signal is given to switch 13 and judgment unit 17 in synchronizing signal switching unit 20. The synchronizing signal outputted (output synchronizing signal) includes clock CLK-P and frame synchronizing signal FRAME-P.

Judgment unit 17 receives the input synchronizing signal and the output synchronizing signal and judges whether both signals synchronize. Judgment unit 17 outputs a decision result to control unit 18.

Control unit 18 receives the decision result. When the decision result shows that the input synchronizing signal and the output synchronizing signal do not synchronize, control unit 18 directs switching unit to output the input synchronizing signal. When the decision result shows that the input synchronizing signal and the output synchronizing signal synchronize, control unit 18 directs switch 13 to output the output synchronizing signal.

As for video recording and playback apparatus 1 according to the embodiment 2, the constitution other than synchronizing signal part 10 is the same as that of video recording and playback apparatus 1 shown in embodiment 1.

According to the embodiment 2, like embodiment 1, even if the recording unit and the playback unit are asynchronous, the video recording and playback apparatus which can perform the recording operation and the playback operation without a synchronous conversion circuit. In the 2nd embodiment, control unit 18 controls the change of switch 13 based on the decision result of judgment unit 17. Thereby, when the input synchronizing signal and the output synchronizing signal become asynchronous, switch 13 is automatically changed to output the input synchronizing signal. Therefore, a video recording and playback apparatus with easy operation is provided.

(Other embodiments) This invention is not limited to the above embodiments. For example, although it is explained in terms where the SDI signal includes the information of the video contents, the information included in the SDI signal is not limited to the information of video content. Even if the SDI signal includes information of voice contents, the video recording and playback apparatus can perform similarly.

Although the above-mentioned embodiment explains the example which uses the BB signal as the external synchronizing signal (the reference signal), the external synchronizing signal is not limited to the BB signal. For example, a tri-level synchronizing signal may be used.

In the above-mentioned embodiment, the internal synchronizing signal generator of the synchronizing signal generator unit synchronizes with the external synchronizing signal the synchronizing signal to generate when the external synchronizing signal exists. However, the synchronizing signal generator unit may be provided with an internal synchronizing generator for exclusive use and a circuit which generates a synchronizing signal directly from the external synchronizing signal, and may change the output from both.

The above-mentioned embodiment explains a situation where the number of input channel and the number of output channel is one each. However, the present invention is not limited to one channel each. The present invention can be applied to a video recording and playback apparatus having two or more input channels and output channels.

Other embodiments or modifications of the present invention will be apparent to those skilled in the art from consideration of the specification and practice of the invention disclosed herein. It is intended that the specification and example embodiments be considered as exemplary only, with a true scope and spirit of the invention being indicated by the following.

## Claims

1. A video recording and playback apparatus, comprising:
an input processing unit configured to receive data containing video data having a 1st synchronizing signal inputted at a 1st rate, to code said video data received and to output coded video data;
an input buffer configured to hold temporarily said coded video data outputted by said input processing unit and to output said coded video data held at a 2nd rate faster than said 1st rate;
a storage processing unit configured to store said coded video data outputted from said input buffer and to read out coded other video data stored at a 3rd rate faster than said 1st rate;
an output buffer configured to hold temporarily said coded other video data read out from said storage processing unit and to output said coded other video data; and
an output processing unit configured to receive a 2nd synchronizing signal and said coded other video data outputted from said output buffer, to decode said coded other video data according to a cycle of said 2nd synchronizing signal and to output said other video data decoded.

2. The video recoding and playback apparatus according to claim 1, further comprising:
a 1st detection unit configured to receive said data inputted at said first rate and to detect said 1st synchronizing signal from said data and to output said 1st synchronizing signal;
a synchronizing signal generator unit configured to output a synchronizing signal synchronized with a synchronizing signal of an external signal as said 2nd synchronizing signal when said external signal being received from outside, and to output a synchronizing signal unrelated to said synchronizing signal of said external signal as said 2nd synchronizing signal when said external signal not being received,
a synchronizing signal switching unit configured to receive said 1st synchronizing signal and said 2nd synchronizing signal, to output said 2nd synchronizing signal when both said 1st synchronizing signal and said 2nd synchronizing signal being synchronized, and to output said 1st synchronizing signal when said 1st and 2nd synchronizing signals are not synchronized;
wherein said input processing unit codes said video data received according to said 1st synchronizing signal or said 2nd synchronizing signal which is outputted from said synchronizing signal switching unit.

3. The video recording and playback apparatus according to claim 2,
wherein said synchronizing signal switching unit includes:
a judgment unit configured to receive said 1st synchronizing signal and said 2nd synchronizing signal, to judge whether both said synchronizing signals synchronize and to output a result based on said judgment;
a switching unit constituted to receive said 1st synchronizing signal and said 2nd synchronizing signal and to output either of both said synchronizing signals selectively; and
a control unit configured to control said switching unit to output one of said synchronizing signals selectively based on said result based on said judgment unit.

4. The video recording and playback apparatus according to claim 2,
wherein said external signal is a black burst signal or a tri-level synchronizing signal.

5. The video recording and playback apparatus according to claim 1,
wherein said 2nd synchronizing signal includes a frame synchronizing signal, and storing said coded video data outputted from said input buffer to said storage processing unit and reading-out said coded other video data stored from said storage processing unit are performed in one frame period of said frame synchronizing signal of said 2nd synchronizing signal.
